# EUROPEAN PATENT APPLICATION

(11) **EP 2 650 110 A1**
(43) Date of publication of application: **16.10.2013**
(21) Application number: 13158292.6
(22) Date of filing: 08.03.2013
(51) Int. Cl.: B29C 70/44, B29C 70/48, B29C 70/54, B29L 31/08

(54) **Resin flow control in VARTM process**

(30) Priority: 12.04.2012 US 201213445256
(71) Applicant: Siemens Aktiengesellschaft, 80333 München (DE)
(72) Inventor: Schibsbye, Karsten, 7000 Fredericia (DK)

(57) **Abstract**

A method for controlling a resin flow (13) in a closed mould cavity (15) during a vacuum assisted resin transfer moulding process is disclosed. The used closed mould cavity (15) comprises at least one resin inlet (2) and a number of resin outlets (3). Each resin outlet (3) is operatively connected to an inlet (6) of a container (5). Each container (5) comprises an outlet (7) which is operatively connected to a vacuum pump (8). The method comprises the steps of evacuating the closed mould cavity (15) through the resin outlets (3) by means of the vacuum pump (8), injecting liquid resin (12) into the closed mould cavity (15), measuring the resin fill level in each container (5) during the injection of liquid resin (12) into the closed mould cavity (15) and adjusting the applied pressure at each container (5) outlet depending on the measured resin fill level in the particular container (5).

## Description

### Field of the Invention

The present invention relates to a method and an apparatus for controlling a resin flow in a closed mould cavity during a vacuum assisted resin transfer moulding process. It further relates to a method for manufacturing a composite structure, for example a wind turbine rotor blade, and to a system for vacuum assisted resin transfer moulding.

### Background Art

Casting large fibre glass composite structures using a vacuum assisted resin transfer moulding (VARTM) process is well-known within the technical field and it is also known to manufacture wind turbine rotor blades using this process. This is for example described in the document WO 2009/103736 A2. According to this document additional sealed containers are operatively connected to vacuum outlets of the mould cavity and the containers comprise flow sensors so as to measure the airflow from the said outlets. This allows for measuring if and where a leak in the mould cavity may be present.

In a vacuum assisted resin transfer moulding process a number of fibre layers are placed in a first mould shell. After finishing the lay up of the fibre material, and for instance additional components, a closed mould cavity is formed. The closed mould cavity can be formed by means of a second mould shell or by means of a vacuum bag, for example. Then the closed mould cavity is evacuated, for example by means of a vacuum pump, through at least one vacuum outlet. Through a resin inlet uncured fluid resin is injected into the mould cavity due to the pressure difference caused by the evacuation of the closed mould cavity. When the mould cavity is completely filled with resin, the resin is cured to form the composite structure.

Generally, the resin flow inside the closed mould cavity depends on the resistance the resin meets on its way through the fibre material. This means, that areas inside the cavity with fibre material which is not yet saturated by resin can occur while in other areas the fibre material is already completely impregnated or saturated by resin.

### Description of the invention

It is a first objective of the present invention to provide an advantageous method for controlling a resin flow in a closed mould cavity during a vacuum assisted resin transfer moulding process. It is a second objective of the present invention to provide an advantageous method for manufacturing a composite structure. A third objective of the present invention is to provide an advantageous apparatus for controlling a resin flow in a closed mould cavity during a vacuum assisted resin transfer moulding process. It is a fourth objective of the present invention to provide a system for vacuum assisted resin transfer moulding.

The first objective is solved by a method for controlling a resin flow in a closed mould cavity as claimed in claim 1. The second objective is solved by a method for manufacturing a composite structure as claimed in claim 6. The third objective is solved by an apparatus for controlling a resin flow in a closed mould cavity as claimed in claim 8 and the fourth objective is solved by a system for vacuum assisted resin transfer moulding as claimed in claim 11. The depending claims define further developments of the present invention.

The inventive method for controlling a resin flow in a closed mould cavity during a vacuum assisted resin transfer moulding process makes use of a closed mould cavity which comprises at least one resin inlet and a number of resin outlets. Each resin outlet is operatively connected to an inlet of a container, preferably to an inlet of a separate container. Each container comprises an outlet which is operatively connected to a vacuum pump.

The method comprises the steps of evacuating the closed mould cavity through the resin outlets by means of the vacuum pump, which means by applying vacuum, injecting liquid resin into the closed mould cavity, measuring the resin fill level in each container during the injection of liquid resin into the closed mould cavity, and adjusting the applied pressure, for example vacuum pressure, at each container outlet depending on the measured resin fill level in the particular container.

The inventive method ensures optimal moulding of a composite structure using a vacuum assisted resin transfer moulding process, since the individual pressure at each resin outlet depending on the resin fill level in each container is controlled. Moreover, the float front of the resin in the composite material can be controlled and it is possible to allow a greater impregnation of certain areas of the composite material. Thereby, areas with for example excessive material and/or very dense material can be sufficiently impregnated. A further advantage of the present invention is that the infusion of resin can be stopped at areas which already have been impregnated, but can be continued at areas which are not sufficiently impregnated. This in turn is cost effective as only a little excess resin is drawn out of the mould cavity.

Furthermore, the invention is advantageous in that the speed of the float front can at least partly be controlled by, for example, intelligent controlling the level of vacuum in the containers. Hereby, the said speed of the float front can be controlled to suit, for example the avoidable rate of resin supply at the resin inlet.

For example a load cell and/or a level sensor and/or a flow sensor can be used for measuring the resin fill level in each container. This means or these means for measuring the resin fill level in each container can provide its data to a pressure control means, for instance a vacuum control system means. This means that the inventive method can comprise the step of providing data from a used means for measuring the resin fill level in each container to a pressure control means.

For example, a pressure between 0.1 bar and 0.3 bar, preferably 0.2 bar, can be applied to each container outlet. The pressure at each container outlet can then be increased depending on the measured resin fill level in the particular container, for example up to a level of between 0.4 and 0.6 bar, for example 0.5 bar.

Furthermore, the pressure at each container outlet can be adjusted such that the resin fill level in the particular container is kept constant at a predetermined positive value, which means that at least a minimal amount of resin is already sucked into the container.

The method for manufacturing a composite structure, for example a wind turbine rotor blade, uses the previously described method, which means that it comprises the steps of the already described method for controlling a resin flow in a closed mould cavity during a vacuum assisted resin transfer moulding process. The inventive method for manufacturing a composite has generally the same properties and advantages as the previously described method for controlling a resin flow.

The inventive apparatus for controlling a resin flow in a closed mould cavity during a vacuum assisted resin transfer moulding process comprises a number of containers. Each container comprises an inlet for connecting it to a resin outlet of the closed mould cavity. Each container further comprises an outlet which is connected to a vacuum pump. The inventive apparatus comprises at least one means for measuring the resin fill level in each container and at least one control means for adjusting the pressure, for example of the applied vacuum, at each container outlet.

Generally, the inventive apparatus for controlling a resin flow can be used to perform the previously described inventive methods. The inventive apparatus has the same properties and advantages as the previously described methods.

For example, the means for measuring the resin fill level in each container can be a load cell and/or a level sensor and/or a flow sensor. Furthermore, the inventive apparatus can comprise a pressure control means, for instance a vacuum control system means. The pressure control means can be configured for receiving data from the means for measuring the resin fill level in each container and for providing data to the control means for adjusting the pressure of the applied vacuum at each container outlet.

The inventive system for vacuum assisted resin transfer moulding comprises a closed mould cavity with at least one resin inlet and a number of resin outlets. Each resin outlet is operatively connected to an inlet of a container, preferably to an inlet of an individual container. Each container comprises an outlet which is operatively connected to a vacuum pump. The system comprises at least one means for measuring the resin fill level in each container and at least one control means for adjusting the pressure, for example of applied vacuum, at each container outlet. Preferably the at least one control means is configured for adjusting the pressure at each container outlet depending on the measured resin fill level in the particular container. Preferably the system is configured for manufacturing a wind turbine rotor blade.

The inventive system for vacuum assisted resin transfer moulding may comprise a previously described apparatus for controlling a resin flow in a closed mould cavity during a vacuum assisted resin transfer moulding process. Generally, the inventive system has the same advantages as the previously described methods and the previously described apparatus.

In general, the basis of the present invention is to control the pressure level or vacuum level in each vacuum outlet independently and thereby being enabled to control the flow front between the resin inlet and the outlets. By means of the present invention an equal and consistent distribution of resin in the closed mould cavity or in the manufactured laminated structure can be obtained. Moreover, the infusion of resin can be stopped at areas which already have been impregnated, and can be continued at areas which are not sufficiently impregnated. This in turn is cost-effective as only a little excess resin is drawn out of the mould cavity.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.
- Figure 1: schematically shows a system for vacuum assisted resin transfer moulding.
- Figure 2: schematically shows a vacuum assisted resin transfer moulding according to the present invention at a first instant of time.
- Figure 3: schematically shows the process at a second instant of time.

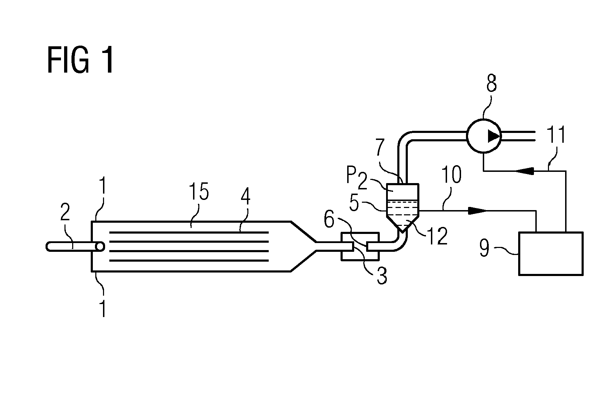

The present invention will now be described with reference to figures 1 to 3. Figure 1 schematically shows a system for vacuum assisted resin transfer moulding. Fibre material 4, for example glass fibre layers, is placed in a closed mould 1. The closed mould 1 may comprise a lower mould part and an upper mould part or a mould part and a vacuum bag. A closed mould cavity 15, wherein the fibre material is located, is formed by the closed mould 1. The closed mould 1 further comprises a resin inlet 2 and a number of resin outlets 3.

Each resin outlet 3 is connected to an inlet 6 of a container 5. The container 5 further comprises an outlet 7 which is connected to a vacuum pump 8. According to preferred embodiment of the invention, a resin container 5 is operatively connected to each of the resin outlets 3. Alternatively, a number of resin outlets 3, for example 2 or 3 resin outlets, can be connected to one container 5.

The container 5 is formed so that it receives the mould cavity resin outlet 3 as a container inlet 6 and is operatively connected to a vacuum pump or vacuum system 8 at is outlet 7. Furthermore, the container 5 comprises means for measuring if and how much resin 12 is drawn from the mould cavity 15 to the container 5. This measuring means, which is not explicitly shown in Fig. 1, can be for example a load cell, a level sensor, a flow sensor etc. Moreover, the means can provide its data 10 to a vacuum control system means 9.

The connected vacuum pump or vacuum system 8 can be controlled so as to adjust the applied vacuum pressure and is controlled by said vacuum control system means 9 which receives data from the measuring means. The control of the vacuum pump 8 by means of the control means 9 is indicated by reference numeral 11.

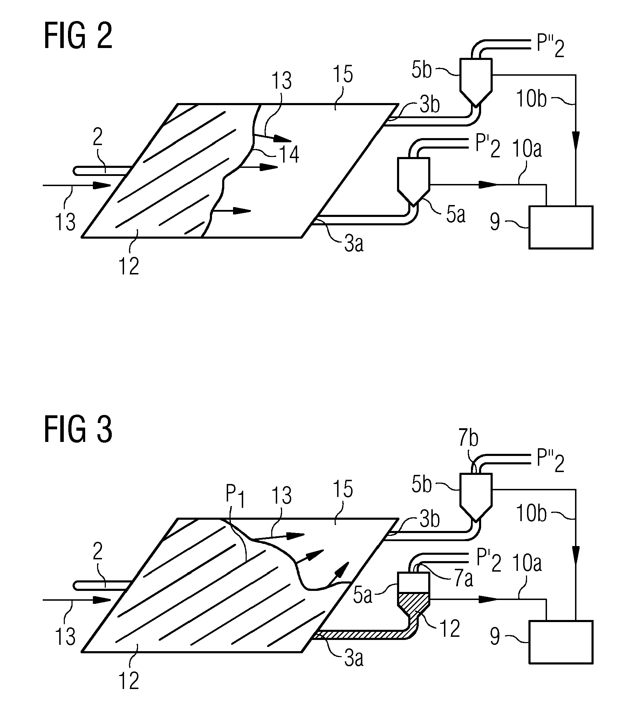

The inventive method for casting a composite structure using a vacuum assisted resin transfer moulding process performed by means of the above-described equipment is schematically described with reference to Figures 2 and 3. Figure 2 schematically shows a vacuum assisted resin transfer moulding according to the present invention at a first instant of time. Figure 3 schematically shows the process at a second instant of time.

Each resin outlet is connected with a separate container, which means that resin outlet and the respective container are in flow connection. In Figures 2 and 3 a first resin outlet 3a is connected to a first container 5a and a second resin outlet 3b is connected to a second container 5b.

In Figure 2 vacuum, for example a pressure of 0.2 bar, is applied to each of the resin outlets 3a and 3b via the containers 5a and 5b. This means, that at the first resin outlet 3a a pressure p₂' = 0.2 bar is applied and at the second resin outlet 3b a pressure p₂" = 0.2 bar is applied. Caused by this pressure reduction resin 12 is sucked through the resin inlet 2 into the closed mould cavity 15. The flow direction of the resin is indicated by arrows 13. The float front is indicated by reference numeral 14. Resin is drawn into the composite fibre material located in the mould cavity from a resin reservoir, for example at 1 bar pressure.

Initially the amount of resin in all containers 5a and 5b connected to the resin outlets 3a and 3b is zero as the composite fibre material 4 is not saturated, for instance locally or globally, with resin 12. As shown in Figure 2, the resin float front 14 is built up in the composite material 4. The float front 14 takes its form after which "resistance" the resin 12 meets on its way through the fibre material 4. In other words, the more "resistance" the slower is the movement of the float front 14. The pressure on the "backside" of the float front 14 is higher, which means less vacuum, than on the "front side" due to the atmospheric pressure which drives the resin 12 towards the resin outlets 3a and 3b.

After some time the float front 14 may have reached one or more of the resin outlets 3a or 3b and resin 12 is drawn into the respective containers 5a or 5b. This situation is schematically shown in Figure 3. In Figure 3 the resin 12 has passed the first outlet 3a and has partly filled the container 5a. The amount of resin 12 in the containers 5a and 5b is measured by measuring means, for example load cells, level sensors, flow sensors etc. The measured data 10a and 10b are provided to the pressure control system or vacuum control system 9. The vacuum control system 9 then individually regulates the vacuum pressure in each container 5a or 5b in order to keep a constant level of resin 12 in the respective container 5a or 5b.

In the situation shown in Figure 3 the applied pressure p₂' at the first container 5a was increased from 0.2 bar up to 0.5 bar, which corresponds to the pressure p₁ = 0.5 bar at the "backside" of the float front 14 in the closed mould cavity 15. By increasing the pressure to 0.5 bar the amount of resin 12 in the first container 5a is kept at a constant level. Hereby it is achieved that the float front 14 can be directed towards the fibre material which is not yet saturated by resin and towards to the second resin outlet 3b. Generally, the vacuum control system 9 individually regulates the vacuum pressure p₂ in each container 5, for example in order to keep a constant level of resin 12 in the container 5.

## Claims

1. Method for controlling a resin flow (13) in a closed mould cavity (15) during a vacuum assisted resin transfer moulding process, wherein the used closed mould cavity (15) comprises at least one resin inlet (2) and a number of resin outlets (3), each resin outlet (3) being operatively connected to an inlet (6) of a container (5), each container (5) comprising an outlet (7) which is operatively connected to a vacuum pump (8),
the method comprises the steps of:
- evacuating the closed mould cavity (15) through the resin outlets (3) by means of the vacuum pump (8),
- injecting liquid resin (12) into the closed mould cavity (15),
**characterised in**
- measuring the resin fill level in each container (5) during the injection of liquid resin (12) into the closed mould cavity (15) and
- adjusting the applied pressure at each container (5) outlet depending on the measured resin fill level in the particular container (5).

2. The method as claimed in claim 1,
**characterised in**
using a load cell and/or a level sensor and/or a flow sensor for measuring the resin fill level in each container (5).

3. The method as claimed in claim 1 or claim 2,
**characterised in**
providing data from a used means for measuring the resin fill level in each container (5) to a pressure control means.

4. The method as claimed in any of the claims 1 to 3,
**characterised in**
applying a pressure between 0.1 bar and 0.3 bar to each container outlet (3) and increasing the pressure at each container outlet (3) depending on the measured resin fill level in the particular container (5).

5. The method as claimed in any of the claims 1 to 4,
**characterised in**
adjusting the pressure at each container outlet (3) such that the resin fill level in the particular container (5) is kept constant at a predetermined positive value.

6. Method for manufacturing a composite structure
**characterised in**
using the method as claimed in any of the claims 1 to 5.

7. The method as claimed in claim 6,
**characterised in**
manufacturing a wind turbine rotor blade.

8. An apparatus for controlling a resin flow in a closed mould cavity (15) during a vacuum assisted resin transfer moulding process,
**characterised in that**
it comprises a number of containers (5), each container (5) comprising an inlet (6) for connecting it to a resin outlet (3) of the closed mould cavity (15) and an outlet (7) which is connected to a vacuum pump (8),
the apparatus further comprises at least one means for measuring the resin fill level in each container (5) and at least one control means for adjusting the pressure at each container outlet (7).

9. The apparatus as claimed in claim 8,
**characterised in that**
the means for measuring the resin fill level in each container (5) is a load cell and/or a level sensor and/or a flow sensor.

10. The apparatus as claimed in claim 8 or claim 9,
**characterised in that**
it comprises a pressure control means.

11. A system for vacuum assisted resin transfer moulding comprising a closed mould cavity (15) with at least one resin inlet (2) and a number of resin outlets (3), each resin outlet (3) is operatively connected to an inlet (6) of a container (5), each container (5) comprises an outlet (7) which is operatively connected to a vacuum pump (8),
**characterised in that**
the system comprises at least one means for measuring the resin fill level in each container (5) and at least one control means for adjusting the pressure at each container outlet (7).

12. The system as claimed in claim 11,
**characterised in that**
it is configured for manufacturing a wind turbine rotor blade.
